(19) Europäisches Patentamt
European Patent Office
Office européen des brevets

(11) **EP 4 651 235 A1**

(12) **EUROPEAN PATENT APPLICATION**
published in accordance with Art. 153(4) EPC

(43) Date of publication:
**19.11.2025 Bulletin 2025/47**

(21) Application number: **23934645.5**

(22) Date of filing: **28.04.2023**

(51) International Patent Classification (IPC):
**H01M 4/48** (2010.01)   **H01M 10/0525** (2010.01)

(52) Cooperative Patent Classification (CPC):
**H01M 10/0525; H01M 4/0423; H01M 4/366; H01M 4/485; H01M 4/625;** Y02E 60/10

(86) International application number:
**PCT/CN2023/091786**

(87) International publication number:
**WO 2024/221453 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **YUN, Liang**
  **Ningde, Fujian 352100 (CN)**

• **YIN, Ziyi**
  **Ningde, Fujian 352100 (CN)**
• **WU, Lili**
  **Ningde, Fujian 352100 (CN)**
• **SUN, Xin**
  **Ningde, Fujian 352100 (CN)**
• **CHEN, Xingbu**
  **Ningde, Fujian 352100 (CN)**
• **LI, Xuan**
  **Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **SILICON-OXYGEN COMPOSITE MATERIAL, PREPARATION METHOD THEREFOR, SECONDARY BATTERY, AND ELECTRIC DEVICE**

(57)    The present application provides a silicon-oxygen composite material comprising a silicon-oxygen material matrix and a first doping element distributed in the silicon-oxygen material matrix, at least a part of the first doping element exists in a crystal form in the silicon-oxygen material matrix, and the crystal has a grain size ≤ 9 nm, wherein the first doping element satisfies: a lithium ion diffusion coefficient of a simple substance of the first doping element at 25°C is larger than that of elemental silicon at 25°C.

FIG. 1

## EP 4 651 235 A1

**Description**

TECHNICAL FIELD

The present application relates to the technical field of batteries, and in particular, to a silicon-oxygen composite material, a preparation method thereof, a secondary battery, and an electrical device.

BACKGROUND

Secondary batteries have characteristics of large capacity, long service life, etc., and thus can be applied widely in electronic devices, such as mobile phones, notebook computers, electric bicycles, electric vehicles, electric airplanes, electric ships, electric toy cars, electric toy ships, electric toy airplanes, electric tools, etc. Since secondary batteries are highly developed, higher requirements are placed on the electrochemical performance thereof. To improve the energy density of secondary batteries, the industry is currently considering using a silicon-based negative electrode active material. However, application of silicon-based negative electrode active material is greatly limited due to disadvantages thereof such as relatively large expansion, poor conductivity, etc. which seriously affect cycle performance and rate performance of a battery.

SUMMARY

The present application is made in view of the above subject, and aims to provide a silicon-oxygen composite material as a negative electrode active material, which can enable a prolonged discharge time, improved rate performance, a prolonged cycle life, and improved cycle performance of a battery.

A first aspect of the present application provides a silicon-oxygen composite material comprising a silicon-oxygen material matrix and a first doping element distributed in the silicon-oxygen material matrix, at least a part of the first doping element exists in a crystal form in the silicon-oxygen material matrix, and the first doping element has a grain size $\leq$ 9 nm, wherein the first doping element satisfies: a lithium ion diffusion coefficient of a simple substance of the first doping element at 25°C is larger than that of elemental silicon at 25°C.

The first doping element is distributed inside the silicon-oxygen material matrix in a crystal form and has a grain size less than or equal to 9 nm, indicating that the first doping element is uniformly dispersed inside the silicon-oxygen material matrix on an atomic scale, a lithium ion migration energy barrier can be effectively reduced to increase a lithium ion diffusion coefficient and improve lithium ion migration kinetics, enabling a prolonged discharge time and improved rate performance of a battery; and further, the crystal, formed by the first doping element, dispersed around silicon grains can alleviate growing of silicon clusters to effectively suppress a pulverization-expansion effect of the silicon-oxygen composite material and enhance structural integrity and volume stability of the silicon-oxygen composite material during a lithium intercalation/deintercalation process, improving cycle performance of a battery; and in addition, the first doping element existing in a crystal form with a small grain size causes no large change in both a crystal structure of the silicon-oxygen material matrix and a phase characteristic of a material, and the material can be well maintained in terms of structural stability and is not easily pulverized during a charge/discharge process, enabling a prolonged cycle life, and improved cycle performance of a battery.

In any implementation, the lithium ion diffusion coefficient of the simple substance of the first doping element at 25°C is greater than $10^{-14}cm^2/S$, optionally greater than $10^{-14}cm^2/S$ and smaller than $10^{-13}cm^2/S$.

In any implementation, the lithium ion diffusion coefficient of elemental silicon at 25°C is less than $10^{-14}cm^2/S$, optionally greater than $10^{-15}cm^2/S$ and less than $^{-14}cm^2/S$.

In any implementation, the first doping element includes at least one of Sn, Ge, Sb, Bi, and Sr.

The first doping element described above has an excellent lithium-ion diffusion coefficient, and has an excellent application prospect since its raw material is easily available and it is suitable for various batteries.

In any implementation, the first doping element has a grain size $\leq$ 7 nm.

The grain size of the first doping element controlled within an suitable range may enable a further prolonged discharge time, a further improved rate performance and cycle performance, and a prolonged cycle life of a battery.

In any implementation, an XRD diffraction pattern of the silicon-oxygen composite material further includes a diffraction peak of a silicon grain, and at least one of the following relational expressions (1) - (2) exists for the silicon-oxygen composite material:

(1) $0.35 \leq Y/2X \leq 4$, optionally $0.7 \leq Y/2X \leq 4$; and

(2) $-5 \leq 5Xsin2\ \theta - Y \leq 15$, optionally $-5 \leq 5Xsin2\ \theta - Y \leq 10$;
wherein Y is the grain size of the first doping element, X is a grain size of the silicon grain, both X and Y being in nm, and 20 is an XRD diffraction angle of the crystal.

By controlling the grain size, Y nm, of the first doping element and the grain size, X nm, of the silicon grain to satisfy the following relation: $0.35 \leq Y/2X \leq 4$ or $-5 \leq 5X\sin 2\theta - Y \leq 15$, a battery has excellent cycle performance and rate performance, and a prolonged cycle life.

In any implementation, an XRD diffraction pattern of the silicon-oxygen composite material includes a diffraction peak of the crystal of the first doping element having a peak width at half height of 3 ° - 7 °, and/or an intensity of 600 $S^{-1}$-1200 $S^{-1}$.

In any implementation, a mass fraction of the first doping element is less than or equal to 12%, optionally 1% - 10%, based on the total mass of the silicon-oxygen composite material.

The mass content of the first doping element controlled within a suitable range enables a battery having excellent cycle performance and rate performance, and a prolonged cycle life.

In any implementation, the silicon-oxygen composite material further comprises a second doping element comprising at least one of a non-metallic element, an alkali metal element, an alkaline earth metal element, and the non-metallic element comprises at least one of B, N, F, Cl, and S;

optionally, the non-metallic element comprises at least one of B, N, F, Cl, and S;

optionally, the alkali metal element comprises at least one of Li, Na, and K; and

optionally, the alkaline earth metal element comprises at least one of Mg, Ca, Be, and Sr.

The silicon-oxygen composite material including the second doping element can increase a discharge capacity retention rate of a battery at a low temperature or/and an energy density of a battery.

In any implementation, a mass fraction of the second doping element is less than or equal to 7%, optionally 1% - 5%, based on the total mass of the silicon-oxygen composite material.

The mass fraction of the second doping element controlled within a suitable range enables a battery having excellent cycle performance and rate performance, and a prolonged cycle life.

In any implementation, the silicon-oxygen composite material further comprises a carbon layer at least partially covering a surface of the silicon-oxygen material matrix, optionally the carbon layer having a thickness of 1-4 nm.

The silicon-oxygen composite material having at least a part of its surface coated with the carbon layer enables a battery having excellent cycle performance and rate performance, and a prolonged cycle life.

In some implementations, the silicon-oxygen composite material has a volume distribution particle diameter Dv50 of 3-15 μm, optionally 4-9 μm.

The volume distribution particle diameter Dv50 of the silicon-oxygen composite material within a suitable range enables a battery having excellent cycle performance and rate performance, and a prolonged cycle life.

A second aspect of the present application provides a preparation method for a silicone composite material, comprising:

performing first vapor deposition on a first vapor comprising elemental silicon and silicon dioxide to obtain a silicon-oxygen material matrix;

performing second vapor deposition on a second vapor comprising a first doping element and the silicon-oxygen material matrix to obtain the silicon-oxygen composite material, at least a part of the first doping element existing in a crystal form in the silicon-oxygen material matrix and the first doping element crystal having a grain size ≤ 9 nm, wherein the first doping element satisfies: a lithium ion diffusion coefficient of a single element of the first doping element at 25°C is larger than that of elemental silicon at 25°C.

By the vapor deposition, a bulk-doped silicon-oxygen composite material is obtained, bulk-doping causing the first doping element uniformly dispersed at an atomic scale within the silicon-oxygen material matrix, so that the first doping element is distributed inside the silicon-oxygen material matrix in a crystal form, and has a crystal grain size less than or equal to 9 nm, indicating that the first doping element is uniformly dispersed inside the silicon-oxygen material matrix on an atomic scale, a lithium ion migration energy barrier can be effectively reduced to increase a lithium ion diffusion coefficient and improve lithium ion migration kinetics, enabling a prolonged discharge time and improved rate performance of a battery; and further, the crystal, formed by the first doping element, dispersed around silicon grains can alleviate growing of silicon clusters to effectively suppress a pulverization-expansion effect of the silicon-oxygen composite material and enhance structural integrity and volume stability of the silicon-oxygen composite material during a lithium intercalation/-deintercalation process, improving cycle performance of a battery; and in addition, the first doping element existing in a crystal form with a small grain size causes no large change in both a crystal structure of the silicon-oxygen material matrix and a phase characteristic of a material, and the material can be well maintained in terms of structural stability and is not easily pulverized during a charge/discharge process, enabling improved cycle performance and a prolonged cycle life of a battery.

In any implementation, a temperature for the first vapor deposition is 1000°C - 1300°C, optionally 1100°C - 1250°C, and/or time for the first vapor deposition is 6 h - 12 h, optionally 8 h - 10 h.

The temperature and/or time for the first vapor deposition controlled within a suitable range can enable an obtained silicon-oxygen material matrix having excellent performance structural parameters, facilitating a subsequent element doping process.

In any implementation, a temperature for the second vapor deposition is 800°C - 900°C, optionally 820°C - 880°C; and/or time for the second vapor deposition is 4 h - 10 h, optionally 6 h - 8 h.

The temperature and/or time for the second vapor deposition controlled within a suitable range can ensure that the first doping element exists as a small-size crystal in the silicon-oxygen material matrix while a bulk-doping distribution of the first doping element is achieved, improving conductivity of a material, and rate performance and cycle performance of a battery.

In some implementations, the preparation method for the silicon-oxygen composite material includes:

performing second vapor deposition on a second vapor comprising the first doping element and the second doping element and the silicon-oxygen material matrix to obtain the silicon-oxygen composite material, wherein the second doping element includes at least one of a non-metal element, an alkali metal element, and an alkaline earth metal element;

optionally, the non-metallic element comprises at least one of B, N, F, Cl, and S;

optionally, the alkali metal element comprises at least one of Li, Na, and K; and

optionally, the alkaline earth metal element comprises at least one of Mg, Ca, Be, and Sr.

For the second doping element, its uniform bulk doping can be achieved by performing doping thereof in a vapor form, and it is possible to improve a discharge capacity retention rate of a battery at a low temperature and/or increase an energy density of a battery.

In any implementation, the preparation method further comprises:

performing a carbon coating treatment on a surface of the silicon-oxygen composite material;

optionally, a temperature for the carbon coating treatment is 500°C - 750°C, optionally 660°C - 720°C; and

optionally, time for the carbon coating treatment is 2 h - 10 h, optionally 6 h - 8 h.

Suitable temperature and/or time for the carbon coating treatment, on one hand, enables to form an uniformly distributed carbon layer structure with a suitable thickness on the surface of the silicon-oxygen composite material, being capable of buffering a volume change of the silicon-oxygen composite material in a lithium deintercalation process and also increasing an electronic conductivity of a material surface to improve cycle performance and rate performance of a battery, and on the other hand, enables to effectively control a grain size of the first doping element and a grain size of silicon within suitable ranges, so that the silicon-oxygen material has excellent structural parameters, thereby enabling a prolonged discharge time, improved rate performance and cycle performance, and a prolonged cycle life of a battery.

A third aspect of the present application provides a secondary battery including a negative electrode tab including the silicon composite material of the first aspect or the silicon composite material prepared by the preparation method of the second aspect.

A fourth aspect of the present application provides an electric device including the secondary battery of the third aspect.

DESCRIPTION OF DRAWINGS

FIG. 1 is an XRD pattern of a silicon composite material in Example 1 according to the present invention;

FIG. 2 is a scanning electron microscope image of the silicone composite material in Example 1 according to the present invention;

FIG. 3 is a schematic diagram of a secondary battery according to an implementation of the present application;

FIG. 4 is an exploded view of the secondary battery according to an implementation of the present application shown in FIG. 3;

FIG. 5 is a schematic diagram of a battery module according to an implementation of the present application;

FIG. 6 is a schematic diagram of a battery pack according to an implementation of the present application;

FIG. 7 is an exploded view of the battery pack according to an implementation of the present application shown in FIG. 6; and

FIG. 8 is a schematic diagram of an electric device using the secondary battery as a power supply according to an implementation of the present application.

Description of reference signs:

1-Battery pack; 2-Upper case; 3-Lower case; 4-Battery module; 5-Secondary battery; 51-Housing; 52-Electrode assembly; 53-Cover plate.

DESCRIPTION OF EMBODIMENTS

Hereinafter, the embodiments of the binder, the preparation method, the electrolyte, the battery, and the electrical device of the present application are described below in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed in the present application, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

Regarding a novel negative electrode active material for a secondary battery, a silicon-based negative electrode material on which attention is widely focused is a highly desirable next-generation secondary negative electrode active material due to its ultra-high lithium storage capacity and a relatively low voltage platform. However, the silicon-based material has relatively many problems in a lithium-ion deintercalation process during charge and discharge: a great change in volume in which the volume of the silicon-based material expands to 300% of its original volume during a lithium-ion intercalation process, and the volume rapidly contracts again when lithium-ion deintercalation, so that active material particles are broken and electrode tabs are disengaged and pulverized, rapidly reducing a cycle life; a large irreversible capacity in which a large amount of an irreversible capacity is generated during an initial charge and discharge process since the silicon-based material, especially the silicon-oxygen material, having low initial coulombic efficiency, contains inactive components which can deplete lithium ions, so that positive electrode matching is difficult to enable a full cell having low efficiency and a short cycle life; and further, poor conductivity of silicon itself as a semiconductor in which rapid electron transfer is not facilitated, thereby affecting rate performance of the silicon-oxygen material.

[Silicon-oxygen composite material]

On that basis, the present application provides a silicon-oxygen composite material comprising a silicon-oxygen material matrix and a first doping element distributed in the silicon-oxygen material matrix, at least a part of the first doping element exists in a crystal form in the silicon-oxygen material matrix, and the first doping element has a grain size $\leq 9$ nm, wherein the first doping element satisfies: a lithium ion diffusion coefficient of a simple substance of the first doping element at 25°C is larger than that of elemental silicon at 25°C.

The first doping element is distributed inside the silicon-oxygen material matrix in a crystal form and has crystal grain size less than or equal to 9 nm, indicating that the first doping element is uniformly dispersed inside the silicon-oxygen material matrix on an atomic scale, a lithium ion migration energy barrier can be effectively reduced to increase a lithium ion diffusion coefficient and improve lithium ion migration kinetics, improving conductivity of a material, enabling a prolonged discharge time and improved rate performance of a battery; and further, the crystal, formed by the first doping element, dispersed around silicon grains can alleviate growing of silicon clusters to effectively suppress a pulverization-expansion effect of the silicon-oxygen composite material and enhance structural integrity and volume stability of the silicon-oxygen composite material during a lithium intercalation/deintercalation process, improving cycle performance of a battery; and in addition, the first doping element existing in a crystal form with a small grain size causes no large change in both a crystal structure of the silicon-oxygen material matrix and a phase characteristic of a material, and the material can be well maintained in terms of structural stability and is not easily pulverized during a charge/discharge process, enabling improved cycle performance and a prolonged cycle life of a battery.

The first doping element has more excellent electrical conductivity and ionic conductivity in a crystal form than in an amorphous form, being capable of effectively increasing a lithium ion diffusion coefficient to improve rate performance of a battery.

As described above, the silicon-oxygen composite material in the present application, as a negative electrode active material, can enable a prolonged discharge time, improved rate performance, a prolonged cycle life, and improved cycle performance of a battery.

In the present application, the grain size of the first doping element, having the meaning known in the art, can be measured using an instrument and a method known in the art. As an example, the XRD pattern of the silicon-oxygen composite material may be measured according to a JIS/K0131-1996 test standard, and peak width at half height $\beta$ and diffraction angle $\theta$ of a diffraction peak of a crystal plane of the first doping element (101) are taken from the XRD pattern of the silicon-oxygen composite material, and used for calculation in the Debye-Scherrer equation to obtain a grain size of a crystal. The Debye-Scherrer equation is as follows: $Dhkl=k\lambda/(\beta cos\theta)$, where $Dhkl$ denotes a grain size of a crystal in nm; k denotes Scherrer constant, 0.89; $\lambda$ denotes an incident X-ray wavelength, 0.15406 nm; $\beta$ denotes a peak width at half height of a diffraction peak in rad; and $\theta$ denotes a diffraction angle in degrees.

In some implementations, the grain size of the first doping element may be optionally less than or equal to 4 nm, less than or equal to 5 nm, less than or equal to 6 nm, less than or equal to 7 nm, less than or equal to 8 nm, or less than or equal to 9 nm.

In some implementations, the first doping element comprises at least two or more elements and the grain size of the first doping element is an average of the grain sizes of the plurality of first doping elements.

In the present application, "a lithium-ion diffusion coefficient" refers to an important parameter for characterizing a kinetic behavior of a material, a larger diffusion coefficient of a material indicating a better discharge capacity of a battery at a large current, a higher power density of the material, and better high rate performance.

The type of "first doping element" in the present application refers to a type of an element, a simple substance formed by which has a lithium-ion diffusion coefficient larger than that of a simple substance of a silicon element.

A lithium-ion diffusion coefficient of a material, having the meaning known in the art, can be tested using a method known in the art. As an example, Galvanostatic Intermittent Titration Technique (GITT) is used in the present application to measure a lithium-ion diffusion coefficient of an elemental material composed of a doping element.

In the present application, the term "crystal" refers to a substance in which mass points (molecules, atoms, ions) of a substance are regularly and periodically arranged in a three dimensional space.

In some implementations, the simple substance of the elemental first doping element has a lithium ion diffusion coefficient at 25°C greater than $10^{-14}$cm²/S, optionally greater than $10^{-14}$cm²/S and smaller than or equal to $10^{-13}$cm²/S,, and the lithium ion diffusion coefficient of elemental silicon at 25°C is less than $10^{-14}$cm²/S, optionally greater than $10^{-15}$cm²/S and less than $10^{-14}$cm²/S.

In some implementations, the lithium ion diffusion coefficient of the simple substance of the first doping element at 25°C may optionally be any value of, or in a range consisting of any two values of $2 \times 10^{-14}$cm²/S, $3 \times 10^{-14}$cm²/S, $4 \times 10^{-14}$cm²/S, $5 \times 10^{-14}$cm²/S, $6 \times 10^{-14}$cm²/S, $7 \times 10^{-14}$cm²/S, $8 \times 10^{-14}$cm²/S, $9 \times 10^{-14}$cm²/S, and $10^{-13}$cm²/S.

In some implementations, the lithium ion diffusion coefficient of the elemental silicon at 25°Cis greater than $10^{-15}$cm²/S and less than $10^{-14}$cm²/S. In some implementations, the lithium ion diffusion coefficient of the elemental silicon at 25°C may optionally be any value of, or in a range consisting of any two values of $2 \times 10^{-15}$cm²/ S, $3 \times 10^{-15}$cm²/ S, $4 \times 10^{-15}$cm²/ S, $5 \times 10^{-15}$cm²/ S, $6 \times 10^{-15}$cm²/ S, $7 \times 10^{-15}$cm²/ S, $8 \times 10^{-15}$cm²/ S, and $9 \times 10^{-15}$cm²/ S.

In some implementations, the first doping element comprises at least one of Sn, Ge, Sb, Bi, and Sr.

In some implementations, the first doping element comprises at least two of Sn, Ge, Sb, Bi, and Sr. For example, the first doping element may include Ge and Sb, or the doping element may include Sn and Bi.

The first doping element described above has an excellent lithium ion diffusion coefficient, and can effectively improve electrical conductivity of the silicon material matrix, increasing rate performance of a battery. And it has an excellent application prospect since its raw material is easily available and it is suitable for various batteries.

In some implementations, the first doping element comprises Sn.

A battery in the prior art has greater polarization at low SOC, especially more severe concentration polarization, limiting further applications of a battery. Sn doped in the silicon-oxygen composite material of the present application enabling an excellent lithium ion diffusion coefficient can improve conductivity of a tab, and reduce an electrode polarization degree, increasing rate performance of a battery, prolonging discharge time of a battery at low SOC to satisfy a new usage scenario.

In the present application, term "battery polarization" refers to a phenomenon that deviation from equilibrium electrode potential, electrode potential when no current passes through a battery, including ohmic polarization, electrochemical polarization, and concentration polarization, occurs at an electrode when current passes through an electrode.

In the application, the term "concentration polarization" refers to polarization caused the diffusion rate of lithium ions participating in reaction in a solid phase which is less than an electrochemical reaction rate.

In some implementations, the first doping element has grain size $\leq$ 7 nm.

In some implementations, the grain size of the first doping element is smaller than or equal to 4 nm, smaller than or equal to 5 nm, smaller than or equal to 6 nm, or smaller than or equal to 7 nm.

The grain size of the first doping element controlled within an suitable range may enable a further prolonged discharge time, a further improved rate performance and cycle performance, and a prolonged cycle life of a battery.

In some implementations, the XRD diffraction pattern of the silicon-oxygen composite material further includes a diffraction peak of a silicon grain, and at least one of the following relational expressions (1) - (2) exists for the silicon-oxygen composite material:

(1) $0.35 \leq Y/2X \leq 4$, optionally $0.7 \leq Y/2X \leq 4$; and

(2) $-5 \leq 5X\sin 2\ \theta$ - $Y \leq 15$, optionally $-5 \leq 5X\sin 2\ \theta$ - $Y \leq 10$;
wherein Y is the grain size of the first doping element, X is a grain size of the silicon grain, both X and Y being in nm, and 2θ is an XRD diffraction angle of the crystal.

In some implementations, the silicon-oxygen composite material has the following relational expression: $0.35 \leq Y/2X \leq 4$, where Y is a grain size of the first doping element, and X is a grain size of a silicon grain.

In some implementations, the silicon-oxygen composite material has any one of the following relational expressions: $0.35 \leq Y/2X \leq 1$, $0.35 \leq Y/2X \leq 0.7$, $0.35 \leq Y/2X \leq 1$, $0.35 \leq Y/2X \leq 2$, $0.35 \leq Y/2X \leq 3$, $0.35 \leq Y/2X \leq 4$, $0.7 \leq Y/2X \leq 1$, $0.7 \leq Y/2X \leq 2$, $0.7 \leq Y/2X \leq 3$, $0.35 \leq Y/2X \leq 4$, $1 \leq Y/2X \leq 2$, $1 \leq Y/2X \leq 3$, $1 \leq Y/2X \leq 4$, $2 \leq Y/2X \leq 3$, $2 \leq Y/2X \leq 3$, $2 \leq Y/2X \leq 4$, and $3 \leq Y/2X \leq 4$.

Herein, a grain size of a silicon grain, having the meaning known in the art, can be measured using a method known in the art. As an example, the XRD pattern of the silicon-oxygen composite material may be measured according to a JIS/K0131-1996 test standard, and peak width at half height β and diffraction angle θ of a diffraction peak of a crystal plane of Si (111) are taken from the XRD pattern of the silicon-oxygen composite material, and used for calculation in the Debye-Scherrer equation to obtain a grain size of silicon grain. The Debye-Scherrer equation is as follows: Dhkl=$k\lambda/(\beta\cos\theta)$, where Dhkl denotes a grain size of a silicon grain in nm, k denotes Scherrer constant, 0.89; $\lambda$ denotes an incident X-ray wavelength, 0.15406 nm; β denotes a peak width at half height of a diffraction peak in rad; and θ denotes a diffraction angle in degrees.

The silicon grain having a suitable grain size can reduce volume expansion of the silicon-oxygen material matrix during charge and discharge, thereby reducing pulverization of a material. In addition, the silicon grain having a suitable size can also effectively shorten a moving distance of a lithium ion during charge and discharge, facilitating to increase rate performance of the silicon-oxygen composite material.

The crystal, formed by the first doping element, dispersed around the silicon grains can alleviate growing of a silicon cluster, both the grain size of the crystal and the grain size of the silicon grain affect the grain size of the silicon cluster, and formed silicon clusters having a large grain size deteriorate rate performance and cycle performance of a battery. Therefore, the grain size, Y nm, of the crystal, and the grain size, X nm, of the silicon grain controlled within the numerical range of $0.35 \leq Y/2X \leq 4$ can effectively reduce generation of a silicon cluster having a large grain size by cooperation of the grain size of the crystal and the grain size of the silicon grain, enabling a battery having excellent cycle performance, rate performance, and a prolonged cycle life.

In some implementations, the silicon-oxygen composite has the following relational expression: $0.7 \leq Y/2X \leq 4$, where Y nm is the grain size of the crystal, and X nm is the grain size of the silicon grain in the silicon-oxygen composite.

In some implementations, the silicon-oxygen composite material has any one of the following relational expressions: $0.7 \leq Y/2X \leq 1$, $0.7 \leq Y/2X \leq 0.7$, $0.7 \leq Y/2X \leq 1$, $0.7 \leq Y/2X \leq 2$, $0.7 \leq Y/2X \leq 3$, $0.7 \leq Y/2X \leq 4$, $1 \leq Y/2X \leq 2$, $1 \leq Y/2X \leq 3$, $1 \leq Y/2X \leq 4$, $2 \leq Y/2X \leq 3$, $2 \leq Y/2X \leq 3$, $2 \leq Y/2X \leq 4$, and $3 \leq Y/2X \leq 4$.

By controlling the grain size, Y nm, of the crystal, and the grain size, X nm, of the silicon grain within the numerical range of $0.7 \leq Y/2X \leq 4$, generation of a silicon cluster having a large grain size can be effectively reduced by cooperation of the grain size of the crystal and the grain size of the silicon grain, further increasing cycle performance of a battery.

In some implementations, the XRD diffraction pattern of the silicon-oxygen composite further comprises the diffraction peak of the silicon grain, and the following relational expression exists for the silicon-oxygen composite material: $-5 \leq 5X\sin 2\theta - Y \leq 15$,
wherein Y is the grain size of the first doping element, X is a grain size of the silicon grain, both X and Y being in nm, and 2θ is an XRD diffraction angle of the crystal.

In some implementations, the silicon-oxygen composite has any one of the following relational expressions:

$$-5 \leq 5X\sin 2\theta - Y \leq 0, \ -5 \leq 5X\sin 2\theta - Y \leq 5, \text{ and } -5 \leq 5X\sin 2\theta - Y \leq 10,$$

$$-5 \leq 5X\sin 2\theta - Y \leq 15, \ 0 \leq 5X\sin 2\theta - Y \leq 5, \text{ and } 0 \leq 5X\sin 2\theta - Y \leq 10,$$

$$0 \leq 5X\sin 2\theta - Y \leq 15, \ 5 \leq 5X\sin 2\theta - Y \leq 10, \text{ and } 5 \leq 5X\sin 2\theta - Y \leq 15, \text{ and}$$

and

$$10 \leq 5X\sin 2\theta - Y \leq 15.$$

In some implementations, the first doping element comprises two or three elements, and then 2θ is an average for the two or three doping elements.

The crystal, formed by the first doping element, dispersed around the silicon grains can alleviate growing of a silicon cluster, both the grain size of the crystal and the grain size of the silicon grain affect the grain size of the silicon cluster, and formed silicon clusters having a large grain size deteriorate rate performance and cycle performance of a battery. In addition, different first doping elements have different influencing degrees on rate performance and cycle performance of a material, and thus, the grain size, Y nm, of the crystal, the grain size of the silicon grain, and the XRD diffraction angle of the crystal controlled within the numerical range of $-5 \leq 5X\sin 2\theta - Y \leq 15$ enables a battery having excellent cycle performance and rate performance, and a prolonged cycle life.

In some implementations, the XRD diffraction pattern of the silicon-oxygen composite further comprises the diffraction peak of the silicon grain, and the following relational expression exists for the silicon-oxygen composite material: $-5 \leq 5X\sin 2\theta - Y \leq 10$,
wherein Y is the grain size of the first doping element, X is a grain size of the silicon grain, both X and Y being in nm, and 2θ is an XRD diffraction angle of the crystal.

In some implementations, the silicon-oxygen composite has any one of the following relational expressions:

$$-5 \leq 5X\sin2\theta-Y \leq 0,\ -5 \leq 5X\sin2\theta-Y \leq 5,\ \text{and} -5 \leq 5X\sin2\theta-Y \leq 10,$$

$$0 \leq 5X\sin2\theta-Y \leq 5,\ 0 \leq 5X\sin2\theta-Y \leq 10,\ \text{and}\ 5 \leq 5X\sin2\theta-Y \leq 10.$$

The grain size, Y nm, of the crystal, the grain size of the silicon grain, and the XRD diffraction angle of the crystal controlled in the numerical value range of $-5 \leq 5X\sin2\theta-Y \leq 10$ can further increase a cycle life of a battery.

In some implementations, the XRD diffraction pattern of the silicon-oxygen composite material comprises a diffraction peak of a crystal having a peak width at half height of 3°-7°.

In some implementations, the diffraction peak of the crystal has an intensity of $600S^{-1}$-$1200S^{-1}$.

In some implementations, the diffraction peak of the crystal has a peak width at half height which is any one value of, or in a range consisting of any two values of 3 °, 4 °, 5 °, 6 °, and 7 °.

In some implementations, the diffraction peak of the crystal has an intensity which is any one of, or in a range consisting of any two values of $600S^{-1}$, $700S^{-1}$, $800S^{-1}$, $900S^{-1}$, $1000S^{-1}$, $1100S^{-1}$, and $1200S^{-1}$.

In some implementations, the first doping element comprises two or more elements, and the intensity and peak width at half height of the diffraction peak of the crystal are average values of the intensities and peak widths at half height of the diffraction peaks of two or more first doping elements.

A peak width at half height and an intensity of a diffraction peak of a crystal, having the meaning known in the art, can be measured using a method known in the art. As an example, the XRD pattern of the silicon-oxygen composite material may be measured according to a JIS/K0131-1996 test standard, and a peak width at half height and an intensity of a diffraction peak of a crystal may be obtained from the XRD pattern of the silicon-oxygen composite material.

A peak width at half height of a diffraction peak of a crystal within a suitable range enables the crystal to have a suitable grain size, enabling a battery to have excellent cycle performance, rate performance, and a prolonged cycle life.

An intensity of a diffraction peak of a crystal within a suitable range indicates a high crystallinity degree of the crystal, which can effectively reduce a lithium ion migration energy barrier, increase a lithium ion diffusion coefficient, and increase lithium ion migration kinetics, enabling a battery to have excellent cycle performance, rate performance, and a prolonged cycle life.

In some implementations, the mass fraction of the first doping element is less than or equal to 12% based on the total mass of the silicon-oxygen composite material. In some implementations, the mass fraction of the first doping element may be optionally any one of less than or equal to 1%, less than or equal to 2%, less than or equal to 3%, less than or equal to 4%, less than or equal to 5%, less than or equal to 6%, less than or equal to 7%, less than or equal to 8%, less than or equal to 9%, less than or equal to 10%, less than or equal to 11%, and less than or equal to 12% based on the total mass of the silicon-oxygen composite material.

The mass content of the first doping element in the silicon-oxygen composite material may be measured by using methods and devices known in the art, for example, with reference to an EPA 6010D-2014 standard, and specifically, the measurement may be performed by using ICP-OES (Elemental Analysis-Inductively Coupled Plasma Optical Emission Spectroscopy), where a sample to be measured is first dissolved in a strong acid to form a liquid, the liquid is then introduced into an ICP light source by means of atomization, and the gaseous atoms to be measured are ionized and excited in a strong magnetic field and then returned from an excited state to a ground state, and energy is released in the above process and recorded as different characteristic spectral lines to perform quantitative analysis of an element.

The first doping element having a suitable mass content can increase the electrical conductivity of the silicon-oxygen composite material and the lithium ion transport ability of the material, and improve cycle performance and rate performance of a battery, while the suitable mass content of the first doping element does not change an internal structure and a crystal phase of a material, and improve cycle performance of a battery.

In some implementations, the mass fraction of the first doping element is 1% - 10% based on the total mass of the silicon-oxygen composite material. In some implementations, the mass fraction of the first doping element may optionally be any one of 1-9%, 1-8%, 1-7%, 1-6%, 1-5%, 1-4%, 1-3%, 2-10%, 2-9%, 2-8%, 2-7%, 2-6%, 2-5%, 2-4%, 3-10%, 3-9%, 3-8%, 3-7%, 3-6%, 3-5%, 3-7%, 3-6%, 3-5%, 4-10%, 4-9%, 4-8%, 4-7%, etc., based on the total mass of the silicon-oxygen composite material.

The mass content of the first doping element controlled within a suitable range can further enable improved electrical conductivity of the silicon-oxygen composite material, and a prolonged discharge time and an improved rate performance of a battery.

In some implementations, the silicon-oxygen composite material further comprises a second doping element comprising at least one of a non-metallic element, an alkali metal element, and an alkaline earth metal element.

In some implementations, the non-metallic element includes at least one of B, N, F, Cl, and S.

In some implementations, the alkali metal element includes at least one of Li, Na, and K.

In some implementations, the alkaline earth metal includes at least one of Mg, Ca, Be, and Sr.

In some implementations, the second doping element comprises a non-metallic element.

At a low temperature, the ability of an active ion to diffuse inside the silicon-oxygen composite material decreases and charge transfer resistance increases significantly, and by adding the non-metallic element, the charge transfer resistance can be reduced to increase a discharge capacity retention rate of a battery at a low temperature, improving use performance of a battery at a low temperature.

In some implementations, the second doping element comprises at least one of an alkali metal, and an alkaline earth metal.

The alkali metal and alkaline earth metal are active for lithium, and can increase the specific capacity of the silicon-oxygen composite material to increase an energy density of a battery.

In some implementations, the mass fraction of the second doping element is less than or equal to 7% based on the total mass of the silicon-oxygen composite material. In some implementations, the mass fraction of the first doping element may be optionally any one of less than or equal to 1%, less than or equal to 2%, less than or equal to 3%, less than or equal to 4%, less than or equal to 5%, less than or equal to 6%, less than or equal to 7% based on the total mass of the silicon-oxygen composite material.

The mass content of the second doping element in the silicon-oxygen composite material may be measured by using methods and devices known in the art, for example, with reference to an EPA 6010D-2014 standard, and specifically, the mass may be measured by using ICP-OES (Elemental Analysis-Inductively Coupled Plasma Optical Emission Spectroscopy), where a sample to be measured is first dissolved in a strong acid to form a liquid, the liquid is then introduced into an ICP light source by means of atomization, and the gaseous atoms to be measured are ionized and excited in a strong magnetic field and then returned from an excited state to a ground state, and energy is released in the above process and recorded as different characteristic spectral lines to perform quantitative analysis of an element.

The mass fraction of the second doping element controlled within a suitable range enables a battery having excellent cycle performance and rate performance, and a prolonged cycle life.

In some implementations, the mass fraction of the second doping element is 1% - 5% based on the total mass of the silicon-oxygen composite material. In some implementations, the mass fraction of the second doping element may optionally be any one of 1-2%, 1-3%, 1-4%, 1-5%, 2-3%, 2-4%, 2-5%, 3-4%, 3-5%, and 4-5% based on the total mass of the silicon-oxygen composite.

The mass fraction of the second doping element controlled within a suitable range may further enable prolonged discharge time, increased cycle performance and rate performance, and a prolonged cycle life of a battery.

In some implementations, the silicon-oxygen composite material further comprises a carbon layer at least partially covering a surface of the silicon-oxygen material matrix.

The carbon layer formed on the surface of the silicon-oxygen material substrate can effectively inhibit particle breaking and pulverization of the silicon-oxygen composite material during a charge/discharge cycle process, and can alleviate volume expansion of the silicon-oxygen composite material, ensuring the structural stability of the silicon-oxygen composite material. After the carbon layer is used for coating, the silicon-oxygen composite material has better conductivity and stability, which can improve cycle stability and rate performance of a battery.

In some implementations, the thickness of the carbon layer is 1 - 4 nm.

The thickness of the carbon layer, having the meaning known in the art, can be tested using methods known in the art. As an example, the silicon-oxygen composite material is subjected to embedding and immobilization by an epoxy resin, and then, a complete particle is cut by using ultramicrotomy to prepare a sample. A cross-section of a selected particle sample is observed by High Resolution Transmission Electron Microscopy for a long-range regularly-arranged ordered region, i.e., a silicon-oxygen material matrix. An amorphous region (no long-range regular lamellae, and lamella being arranged disorderly) coated on the surface of the silicon material matrix is a carbon layer region. The average thickness of the carbon layer is obtained by multiple measurements.

In some implementations, the volume distribution particle diameter Dv50 of the silicon-oxygen composite material is 3-8 $\mu$m.

In some implementations, the volume distribution particle diameter Dv50 of the silicon-oxygen composite material may optionally be any one of 3-4 $\mu$m, 3-5 $\mu$m, 3-6 $\mu$m, 3-7 $\mu$m, 3-8 $\mu$m, 4-5 $\mu$m, 4-6 $\mu$m, 4-7 $\mu$m, 4-8 $\mu$m, 5-6 $\mu$m, 5-7 $\mu$m, 5-8 $\mu$m, 6-7 $\mu$m, 7-8 $\mu$m, and 6-8 $\mu$m.

The volume distribution particle diameter, Dv50, of the silicon-oxygen composite material, having the meaning known in the art, can be tested using methods known in the art. As an example, for example, a sample of the silicon-oxygen composite material is measured according to a GB/T 19077-2016/ISO 13320: 2009 standard, and a laser particle size analyzer (e.g., Malvern Master Size 3000) may be used as a test device.

The volume distribution particle diameter Dv50 of the silicon-oxygen composite material controlled within a suitable range enables the silicon-oxygen composite material having a relatively stable structure, and relatively good kinetic performance, facilitating to increase cycle performance and rate performance of a battery.

In some implementations, the volume distribution particle diameter Dv50 of silicon-oxygen composite is 4-6 $\mu$m.

In some implementations, the volume distribution particle diameter Dv50 of the silicon-oxygen composite material may optionally be any one of 4-6 $\mu$m, 4-7 $\mu$m, 4-8 $\mu$m, and 5-6 $\mu$m.

The volume distribution particle diameter Dv50 of the silicon-oxygen composite material controlled within a suitable range may enable a further increased lithium ion transport rate, and an improved conductivity of a material, and enable a further prolonged discharge time, increased cycle performance and rate performance, and a prolonged cycle life of a battery.

In some implementations, provided is a preparation method for a silicon-oxygen composite material, comprising:

performing first vapor deposition on a first vapor comprising elemental silicon and silicon dioxide to obtain a silicon-oxygen material matrix;

performing second vapor deposition on a second vapor comprising a first doping element and the silicon-oxygen material matrix to obtain the silicon-oxygen composite material, at least a part of the first doping element existing in a crystal form in the silicon-oxygen material matrix and the first doping element crystal having a grain size $\leq$ 9 nm, wherein the first doping element satisfies: a lithium ion diffusion coefficient of a single element of the first doping element at 25°C is larger than that of elemental silicon at 25°C.

In the present application, the term "vapor deposition" refers to a process in which a solid deposit is formed by reaction a gaseous or vaporous substance of at a vapor-phase or gas-solid interface.

By the vapor deposition, a bulk-doped silicon-oxygen composite material is obtained, bulk-doping causing the first doping element uniformly dispersed at an atomic scale within the silicon-oxygen material matrix, so that the first doping element is distributed inside the silicon-oxygen material matrix in a crystal form, and has a crystal grain size less than or equal to 9 nm, indicating that the first doping element is uniformly dispersed inside the silicon-oxygen material matrix on an atomic scale, a lithium ion migration energy barrier can be effectively reduced to increase a lithium ion diffusion coefficient and improve lithium ion migration kinetics, enabling a prolonged discharge time and improved rate performance of a battery; and further, the crystal, formed by the first doping element, dispersed around silicon grains can alleviate growing of silicon clusters to effectively suppress a pulverization-expansion effect of the silicon-oxygen composite material and enhance structural integrity and volume stability of the silicon-oxygen composite material during a lithium intercalation/-deintercalation process, improving cycle performance of a battery; and in addition, the first doping element existing in a crystal form with a small grain size causes no large change in both a crystal structure of the silicon-oxygen material matrix and a phase characteristic of a material, and the material can be well maintained in terms of structural stability and is not easily pulverized during a charge/discharge process, enabling improved cycle performance and a prolonged cycle life of a battery.

In some implementations, a temperature for the first vapor deposition is 800-1300°C.

In some implementations, the temperature for the first vapor deposition is 1100-1250°C.

In some implementations, the temperature for the first vapor deposition is any value of, or in a range consisting of any two values of 1000°C, 1100°C, 1200°C, 1250°C, and 1300°C.

In some implementations, time for the first vapor deposition is 6 h - 12 h.

In some implementations, the time for the first vapor deposition is 8 h - 12 h.

In some implementations, the time for the first vapor deposition is any value of, or in a range consisting of any two values of 6h, 7h, 8h, 9h, 10h, 11h, and 12h.

The temperature and/or time for the first vapor deposition controlled within a suitable range can enable an obtained silicon-oxygen material matrix having excellent performance structural parameters, facilitating a subsequent element doping process.

In some implementations, the grain size of the silicon dioxide is 1-4 nm. In some implementations, the grain size of the silicon dioxide may optionally be any one of 1-2nm, 1-3nm, 1-4nm, 2-3nm, 2-4nm, and 3-4nm.

The grain size of the raw material, silicon dioxide, controlled within a suitable range enables that the grain size of the silicon grain in the silicon-oxygen composite material is within a suitable range to avoid formation of a silicon cluster having a large grain size, and the pulverization-expansion effect of the silicon-oxygen composite material can be effectively suppressed to improve cycle stability of a battery.

In some implementations, temperature for the second vapor deposition is 800°C-900°C.

In some implementations, the temperature for the second vapor deposition is 820°C-880°C.

In some implementations, the temperature for the second vapor deposition is any value of, or in a range consisting of any two values of 800°C, 820°C, 880°C, and 900°C.

In some implementations, the time for the second vapor deposition is 4 h - 10 h.

In some implementations, the time for the second vapor deposition is 6 h - 8 h.

In some implementations, the time for the second vapor deposition is any value of, or in a range consisting of any two values of 4 h, 5 h, 6 h, 7 h, 8 h, 9 h, and 10 h.

The temperature and/or time for the second vapor deposition controlled within a suitable range can ensure that the first doping element exists as a small-grain-size crystal in the silicon-oxygen material matrix while a bulk-doping distribution of the first doping element is achieved, improving conductivity of a material, avoiding formation of large crystals, and improving rate performance and cycle performance of a battery.

In some implementations, the preparation method for a silicon-oxygen composite material includes: performing second vapor deposition on a second vapor comprising the first doping element and the second doping element and the silicon-oxygen material matrix to obtain the silicon-oxygen composite material, wherein the second doping element includes at least one of a non-metal element, an alkali metal element, and an alkaline earth metal element.

In some implementations, the non-metallic element includes at least one of B, N, F, Cl, and S.

In some implementations, the alkali metal element includes at least one of Li, Na, and K.

In some implementations, the alkaline earth metal includes at least one of Mg, Ca, Be, and Sr.

For the second doping element, its uniform bulk doping can be achieved by performing doping thereof in a vapor form, and it is possible to increase a discharge capacity retention rate of a battery at a low temperature and/or increase an energy density of a battery.

In some implementations, the preparation method further includes: performing a carbon coating treatment on a surface of the silicon-oxygen composite material.

In some implementations, the temperature for the carbon coating treatment is 500°C-750°C.

In some implementations, the temperature for the carbon coating treatment is 660°C-720°C.

In some implementations, the temperature for the carbon coating process is any value of, or in a range consisting of any two values of 500°C, 550°C, 600°C, 660°C, 720°C, and 750°C.

In some implementations, time for the carbon coating treatment is 2 h - 10 h.

In some implementations, the time for the carbon coating treatment is 6 h - 8 h.

In some implementations, the time for the carbon coating treatment is any value of, or in a range consisting of any two values of 2 h, 4 h, 6 h, 8 h, and 10 h.

Suitable temperature and/or time for the carbon coating treatment, on one hand, enables to form an uniformly distributed carbon layer structure with a suitable thickness on the surface of the silicon-oxygen composite material, being capable of buffering a volume change of the silicon-oxygen composite material in a lithium deintercalation process and also increasing an electronic conductivity of a material surface to improve cycle performance and rate performance of a battery, and on the other hand, enables to effectively control a grain size of the first doping element and a grain size of silicon within suitable ranges, so that the silicon-oxygen material has excellent structural parameters, thereby enabling a prolonged discharge time, improved rate performance and cycle performance, and a prolonged cycle life of a battery.

[Negative electrode tab]

The negative electrode tab includes a negative electrode current collector and a negative electrode film layer disposed on at least one surface of the negative electrode current collector, the negative electrode film layer including a negative electrode active material.

In some implementations, a negative electrode tab is provided that includes a negative electrode active material that includes the silicon-oxygen composite material in some implementations or the silicon-oxygen composite material prepared by the preparation method in some implementations.

The tab has excellent conductivity and cycle stability, and has high specific capacity.

In some implementations, the mass content of the silicon-oxygen composite material is more than or equal to 20% based on the total mass of the negative electrode active material. In some implementations, the mass content of the silicon-oxygen composite material may optionally be any one of more than or equal to 20%, more than or equal to 30%, more than or equal to 40%, more than or equal to 50%, more than or equal to 60%, more than or equal to 70%, more than or equal to 80%, and more than or equal to 90% based on the total mass of the negative electrode active material.

The mass content of the silicon-oxygen composite material within a suitable range enables the silicon-oxygen composite material having a high theoretical specific capacity, and further, the suitable content of the silicon-oxygen composite material enables the material having good electrical conductivity, and a battery having excellent rate performance.

In some implementations, the mass content of the silicon-oxygen composite material is 25%-90% based on the total mass of the negative electrode active material. In some implementations, the mass content of the silicon-oxygen composite material may optionally be 25%, 30%, 40%, 50%, 60%, 70%, 80%, or 90%, or a value in the range consisting of any two values above, based on the total mass of the negative electrode active material.

The silicon-oxygen composite material controlled within a suitable range may balance an energy density and a cycle life of a battery to comprehensively improve electrochemical performance of a battery.

In some implementations, the present application also provides a secondary battery comprising the negative electrode tab in any implementation.

In some implementations, the secondary battery has an energy density of 400 - 500 Wh/kg.

At 25°C, the secondary battery is left to stand for 2 h, charged at 0.1 C to a charge cut-off voltage, and then continually changed with a constant voltage at the charge cut-off voltage until a current is 0.05 C to stop the charging (where C represents a rated capacity of a battery cell). The secondary battery is left to stand at 25°C for 1 h. The secondary battery is discharged at 0.1 C to a discharge cut-off voltage, and total discharge capacity C0 and total discharge energy E0 discharged from the secondary battery are recorded.

Mass measurement of a secondary battery: a secondary battery is placed on an electronic scales until a mass reading is stable, and mass value M0 of the secondary battery is read.

Mass energy density of a secondary battery is E0/M0.

As an example, the negative electrode current collector has two surfaces opposite in its own thickness direction, and the negative electrode film layer is disposed on either one or both of the two opposite surfaces of the negative electrode current collector.

In some embodiments, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode active material may be a negative electrode active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

In some implementations, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some implementations, the negative electrode tab of a total battery may be prepared in the following manner: dispersing the above-mentioned components for preparing the negative electrode tab, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode tab of the total battery.

[Positive electrode tab]

The positive electrode tab includes a positive current collector and a positive electrode film layer disposed on at least one surface of the positive current collector, the positive electrode film layer including a positive electrode active material.

As an example, the positive electrode current collector has two surfaces opposed in its own thickness direction, and the positive electrode film layer is provided on either one or both of the two opposed surfaces of the positive electrode current collector.

In some embodiments, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode tab may be prepared by dispersing the above components for preparing a positive electrode tab, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

[Electrolyte]

The electrolyte functions to conduct ions between the positive electrode tab and the negative electrode tab. The type of the electrolyte is not specifically limited in this application, and may be selected according to a requirement. For example, the electrolyte may be liquid, gelled or all solid.

In some embodiments, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

[Separator]

In some embodiments, the secondary battery further includes a separator. The type of the separator is not particularly limited in this application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the positive electrode tab, the negative electrode tab, and the separator may be manufactured into the electrode assembly through a winding process or a lamination process.

In some embodiments, the secondary battery may include an outer package. The outer package may be used to package the electrode assembly and the electrolyte.

In some implementations, the outer package of the secondary battery may be a hard case, such as a hard plastic case, an aluminum case, a steel case, or the like. The outer package of the secondary battery may also be a pouch, such as a bag-type pouch. The material of the pouch may be plastic, and examples of the plastic include polypropylene, polybutylene terephthalate, and polybutylene succinate.

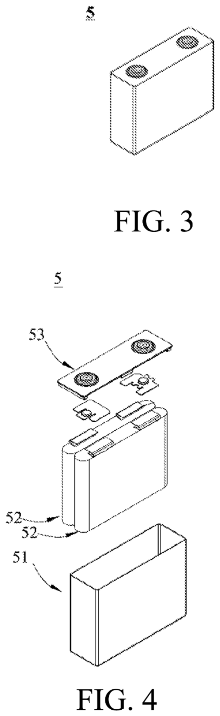

The shape of the secondary battery is not limited in this application, and may be a cylindrical shape, a square shape, or any other shape. For example, FIG. 3 shows a secondary battery 5 of a square structure as an example.

In some implementations, referring to FIG. 4, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodation chamber, and the cover plate 53 can cover the opening to close the accommodation chamber. The positive electrode plate, the negative electrode plate, and the separator may be formed into the electrode assembly 52 through a winding process or a lamination process. The electrode assembly 52 is enclosed within the accommodation chamber. The electrolyte solution is impregnated into the electrode assembly 52. There may be one or a plurality of electrode assemblies 52 included in the secondary battery 5, and the number may be selected by those skilled in the art according to specific practical requirements.

In some implementations, the secondary batteries may be assembled into a battery module, and there may be one or a plurality of secondary batteries included in the battery module, and the specific number may be selected by those skilled in the art according to the application and capacity of the battery module.

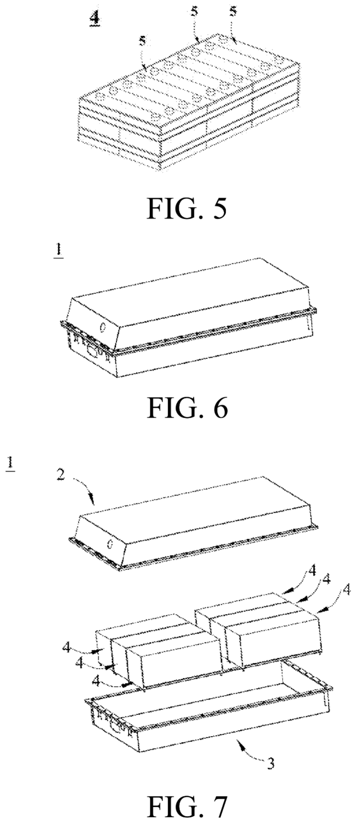

FIG. 5 shows a battery module 4 as an example. Referring to FIG. 5, in the battery module 4, a plurality of secondary batteries 5 may be arranged in series in the longitudinal direction of the battery module 4. Certainly, the secondary batteries may alternatively be arranged in any other manner. Further, the plurality of secondary batteries 5 may be fixed by fasteners.

Optionally, the battery module 4 may further include a housing with an accommodating space. The plurality of secondary batteries 5 are accommodated in the accommodating space.

In some implementations, the battery modules may be further assembled into a battery pack, and there may be one or a plurality of battery modules included in the battery pack, and the specific number may be selected by those skilled in the art according to the application and capacity of the battery pack.

FIG. 6 and FIG. 7 show a battery pack 1 as an example. Referring to FIG. 6 and FIG. 7, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery box.

In addition, the present application further provides an electric device including at least one of a secondary battery, a battery module, or a battery pack provided by the present application. The secondary battery, the battery module, or the battery pack may be used as a power source of the electric device and may also be used as an energy storage unit of the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The secondary battery, the battery module, or the battery pack may be selected according to use requirements of the electric device.

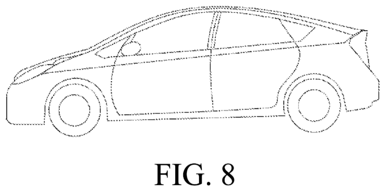

FIG. 8 shows an electric device as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

The following is data of lithium ion diffusion coefficients of simple substances of first doping elements and elemental silicon used in following examples:

a simple substance of element Sn has a lithium ion diffusion coefficient at 25°C of $1 \times 10^{-13}$ cm$^2$/S;

a simple substance of element Ge has a lithium ion diffusion coefficient at 25°C of $5 \times 10^{-14}$ cm$^2$/S;

a simple substance of element Sb has a lithium ion diffusion coefficient at 25°C of $7 \times 10^{-14}$ cm$^2$/S;

a simple substance of element Bi has a lithium ion diffusion coefficient at 25°C of $4 \times 10^{-13}$ cm$^2$/S;

a simple substance of element Sr has a lithium ion diffusion coefficient at 25°C of $6 \times 10^{-13}$ cm$^2$/S;

a simple substance of element B has a lithium ion diffusion coefficient at 25°C of $10^{-16}$ cm$^2$/S; and

elemental silicon has a lithium ion diffusion coefficient at 25°C of $2 \times 10^{-15}$ cm$^2$/S.

## Examples

Examples of the present application are described below. The example described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

Example 1

(1) Preparation of positive electrode tab

$LiNi_{0.98}Co_{0.01}Mn_{0.01}O_2$, carbon black as a conductive agent, and polyvinylidene fluoride (PVDF) as a binder were dissolved in a solvent N-methylpyrrolidone at a mass ratio of 97%: 1%: 2%, and were mixed and stirred uniformly to obtain a positive electrode slurry; and it was coated to a surface of a positive electrode current collector, followed by drying, cold pressing, and slitting to obtain a positive tab.

(2) Preparation of negative electrode tab

1) Preparation of a silicon-oxygen composite material

900 g of Si powder and 1200 g of $SiO_2$ powder were mixed to obtain a silicon source, it was added to a heating chamber 1 of a vacuum furnace, heating was started after a vacuum degree was less than 1 Pa by evacuation, and after heating to 1300°C, the silicon source was fed to a deposition system for deposition at 1200°C for 6.6 h to obtain a silicon-oxygen material matrix; and 30 g of tin metal was added to a heating chamber 2, heating was started after a vacuum degree was less than 10 Pa by evacuation, and after heating to 1100°C, the obtained mixture was fed into a deposition system for deposition at 830°C for 6.2 h to obtain a bulk deposited material after natural cooling to room temperature.

The obtained deposited material was crushed by jet milling into particles having a median diameter of 5 $\mu$m, the particles were added to a CVD vapor deposition furnace to perform a carbon coating treatment, acetylene gas was fed at a mass flow rate of 700 sccm, deposition was performed at 680°C for 5 h, the coated material was heated to 800°C at a heating rate of 5°C/min under a nitrogen atmosphere, and the temperature was kept for 1 h, following by natural cooling to obtain a silicon-oxygen composite material.

2) Preparation of a negative electrode tab: a negative electrode active material was obtained by mixing artificial graphite and the above prepared silicon-oxygen composite material at a mass ratio of 3: 7, the negative electrode active material, carbon black as a conductive agent, carbon nanotube (CNT), styrene-butadiene rubber (SBR) as a binder, and sodium carboxymethyl cellulose (CMC) as a thickener at a weight ratio of 94.5%: 1%: 0.375%: 2.8%: 1.325% were added to deionized water, and mixed and stirred uniformly to obtain a negative electrode slurry; and it was coated on a negative electrode current collector, following by drying, cold pressing, and slitting to obtain a negative electrode tab.

(3) Separator

A polyethylene film was used as a separator.

(4) Preparation of electrolyte

In a glove box in an argon atmosphere ($H_2O$<0.1ppm, and $O_2$<0.1ppm), ethylene carbonate, ethyl methyl carbonate, diethyl carbonate, and fluoroethylene carbonate (FEC) as organic solvents, were uniformly mixed at a volume ratio of 1: 1: 1: 1, and $LiPF_6$ was added and dissolved in the organic solvent, so that the concentration of the electrolytic solution was 1mol/L to obtain an electrolyte of Example 1.

(5) Preparation of a secondary battery

The positive electrode tab, separator, and negative electrode tab of Example 1 were stacked sequentially, where the separator was located between the positive and negative electrode tabs to play a separating role, and then wound to obtain a cell, a tab was welded to the cell, the cell was enclosed in an aluminum case, then an electrolyte was injected and sealing was performed, following by standing, formation, shaping, capacity testing, etc., to obtain a lithium-ion secondary battery.

In Examples 2-5, preparation parameters were substantially the same as those in Example 1, except that a first doping metal element was different, and specific parameters are shown in table 1.

Example 2:

900 g of Si powder and 1200 g of $SiO_2$ powder having a grain size of 3 nm were mixed to obtain a silicon source, it was added to a heating chamber 1 of a vacuum furnace, heating was started after a vacuum degree was less than 1 Pa by evacuation, and after heating to 1300°C, the silicon source was fed to a deposition system for deposition at 1160°C for 6.7 h to obtain a silicon-oxygen material matrix; and 30 g of germanium metal was added to a heating chamber 2, heating was started after a vacuum degree was less than 12 Pa by evacuation, and after heating to 1100°C, the obtained mixture was fed into a deposition system for deposition at 828°C for 6.4 h to obtain a bulk deposited material after natural cooling to room temperature.

Example 3:

900 g of Si powder and 1200 g of $SiO_2$ powder having a grain size of 2 nm were mixed to obtain a silicon source, it was added to a heating chamber 1 of a vacuum furnace, heating was started after a vacuum degree was less than 1 Pa by evacuation, and after heating, the silicon source was fed to a deposition system for deposition at 1170°C for 6.5 h to obtain a silicon-oxygen material matrix; and 30 g of stibium metal was added to a heating chamber 2, heating was started after a vacuum degree was less than 10 Pa by evacuation, and after heating to 1100°C, the obtained mixture was fed into a deposition system for deposition at 827°C for 6.9 h to obtain a bulk deposited material after natural cooling to room temperature.

Example 4:

900 g of Si powder and 1200 g of $SiO_2$ powder having a grain size of 2 nm were mixed to obtain a silicon source, it was added to a heating chamber 1 of a vacuum furnace, heating was started after a vacuum degree was less than 1 Pa by evacuation, and after heating, the silicon source was fed to a deposition system for deposition at 1180°C for 6.4 h to obtain a silicon-oxygen material matrix; and 30 g of bismuth metal was added to a heating chamber 2, heating was started after a vacuum degree was less than 10 Pa by evacuation, and after heating to 1250°C, the obtained mixture was fed into a deposition system for deposition at 826°C for 6.8 h to obtain a bulk deposited material after natural cooling to room temperature.

Example 5:

900 g of Si powder and 1200 g of $SiO_2$ powder having a grain size of 2 nm were mixed to obtain a silicon source, it was added to a heating chamber 1 of a vacuum furnace, heating was started after a vacuum degree was less than 1 Pa by evacuation, and after heating to 1300°C, the silicon source was fed to a deposition system for deposition at 1190°C for 6.8 h to obtain a silicon-oxygen material matrix; and, 15g of tin metal was added to a heating chamber 2, and heating was started after the heating chamber 2 was less than 10 Pa by evacuation, heating to 1100°C. 15g of germanium metal was added to a heating chamber 3, and then heating was started after a vacuum degree was less than 12 Pa by evacuation, heating to 1100°C. The vapor in the heating chamber 2 and heating chamber 3 was introduced into the deposition system for deposition at 825°C for 6.7 h to obtain a bulk deposited material after natural cooling to room temperature.

Examples 6-11

The preparation parameters in Examples 6-11 were substantially the same as those in Example 1, except for the temperature and time for the first vapor deposition, the temperature and time for the second vapor deposition, and the treatment temperature for carbon coating, and specific parameters are shown in table 1.

Examples 12-16

The preparation parameters in Examples 12-16 were substantially the same as those in Example 1, except for the temperature and time for the first vapor deposition, the temperature and time for the second vapor deposition, and the treatment temperature for the carbon coating, and except that the mass of tin metal was adjusted to 15 g, 45 g, 150 g, 7.5 g, and 180 g in Examples 12-16, respectively, thereby adjusting the mass content of tin, and the specific parameters are shown in table 1.

Examples 17-18

The preparation parameters in Example 17-18 were substantially the same as those in Example 1, except that the second doping element, boron or lithium, was included, specifically.

Example 17

900 g of Si powder and 1200 g of $SiO_2$ powder having a grain size of 2 nm were mixed to obtain a silicon source, it was added to a heating chamber 1 of a vacuum furnace, heating was started after a vacuum degree was less than 1 Pa by evacuation, and after heating to 1300°C, the silicon source was fed to a deposition system for deposition at 1175°C for 7.6 h to obtain a silicon-oxygen material matrix; and also, 30 g of tin metal was added to a heating chamber 2, and heating was started after the heating chamber 2 was less than 10 Pa by evacuation, until 1100°C. 30g of boron was added to a heating chamber 3, and then heating was started after a vacuum degree was less than 10 Pa by evacuation, heating to 1180°C. The vapor in the heating chamber 2 and heating chamber 3 was introduced into the deposition system for deposition at 850°C for 6.9 h to obtain a bulk deposited material after natural cooling to room temperature.

Example 18

900 g of Si powder and 1200 g of SiO$_2$ powder having a grain size of 2 nm were mixed to obtain a silicon source, it was added to a heating chamber 1 of a vacuum furnace, heating was started after a vacuum degree was less than 1 Pa by evacuation, and after heating to 1300°C, the silicon source was fed to a deposition system for deposition at 1175°C for 7.5 h to obtain a silicon-oxygen material matrix; and also, 30 g of tin metal was added to a heating chamber 2, and heating was started after the heating chamber 2 was less than 10 Pa by evacuation, heating to 1100°C. 30g of lithium was added to a heating chamber 3, and then heating was started after a vacuum degree was less than 10 Pa by evacuation, heating to 900°C. The vapor in the heating chamber 2 and heating chamber 3 was introduced into the deposition system for deposition at 855°C for 7 h to obtain a bulk deposited material after natural cooling to room temperature.
In Example 1-3, preparation parameters were substantially the same as those in Example 1, and specific parameters are shown in table 1.

Comparative example 1

900g of Si powder and 1200g of SiO$_2$ powder having a grain size of 2 nm were mixed to obtain a silicon source, it was added to a heating chamber 1 of a vacuum furnace, and heating was started after a vacuum degree is less than 1 Pa by evacuation, heating to 1300°C; the vapor in the heating chamber 1 was fed to a deposition zone in a deposition system, the temperature of the deposition zone was controlled to maintain at 1170°C, deposition time was 7.3h, and a bulk deposited material was obtained after natural cooling to room temperature.

Comparative example 2

900 g of Si powder and 1200 g of SiO$_2$ powder having a grain size of 2 nm were mixed to obtain a silicon source, it was added to a heating chamber 1 of a vacuum furnace, heating was started after a vacuum degree was less than 1 Pa by evacuation, and after heating to 1300°C, the silicon source was fed to a deposition system for deposition at 1170°C for 7.6 h to obtain a silicon-oxygen material matrix; and also, 30 g of boron was added to a heating chamber 2, heating was started after a vacuum degree was less than 10 Pa by evacuation, and after heating to 1100°C, the obtained mixture was fed into a deposition system for deposition at 800°C for 7.4 h to obtain a bulk deposited material after natural cooling to room temperature.
The obtained deposited material was crushed by jet milling into particles having a median diameter of 5 $\mu$m, the particles were added to a CVD vapor deposition furnace to perform a carbon coating treatment, acetylene gas was fed at a mass flow rate of 700 sccm, deposition was performed at 680°C for 5 h, the coated material was heated to 800°C at a heating rate of 5°C/min under a nitrogen atmosphere, and the temperature was kept for 1 h, following by natural cooling to obtain a silicon-oxygen composite material.

Comparative example 3

900 g of Si powder and 1200 g of SiO$_2$ powder having a grain size of 2 nm were mixed to obtain a silicon source, it was added to a heating chamber 1 of a vacuum furnace, heating was started after a vacuum degree was less than 1 Pa by evacuation, and after heating to 1300°C, the silicon source was fed to a deposition system for deposition at 1180°C for 7.5 h to obtain a silicon-oxygen material matrix; and, 30 g of tin metal was added to a heating chamber 2, heating was started after a vacuum degree was less than 10 Pa by evacuation, and after heating to 1100°C, the obtained mixture was fed into a deposition system for deposition at 800°C for 7.5 h to obtain a bulk deposited material after natural cooling to room temperature.
The obtained deposited material was crushed by jet milling into particles having a median diameter of 5 $\mu$m, the particles were added to a CVD vapor deposition furnace to perform a carbon coating treatment, acetylene gas was fed at a mass flow rate of 700 sccm, deposition was performed at 800°C for 5 h, the coated material was heated to 800°C at a heating rate of 5°C/min under a nitrogen atmosphere, and the temperature was kept for 1 h, following by natural cooling to obtain a silicon-oxygen composite material.

II. Test Method

1. A lithium Ion diffusion coefficient of each element

(1) Preparation of a button battery: simple-substance materials formed by doping elements or a silicon element, a binder, and a conductive agent are mixed at a ratio of 8: 1: 1, added to deionized water, and mixed and stirred uniformly to obtain a negative electrode slurry; and it is coated on a surface of a copper foil as a negative electrode current collector, following by drying, cold pressing, and slitting to obtain a negative electrode tab, and a small-circular negative electrode sheet having a certain area (153.86 mm$^2$ in the present application) is obtained using a punching mold. Using a metal lithium sheet as a counter electrode and a PP film as a separator, an electrolyte is formulated by mixing ethylene carbonate, ethyl methyl carbonate, diethyl carbonate, and FEC are mixed at a volume ratio of 1: 1: 1: 1 to form a solvent, and dissolving LiPF$_6$ as a lithium salt in the above solvent to prepare a solution with a concentration of 1 mol/L, and a CR2032-type button battery is formed by assembling in a glove box under an argon atmosphere.

(2) Lithium ion diffusion coefficients of simple substances formed by doping elements or elemental silicon are calculated according to the following formula: $D_{Li}= 1/(1000 \times S \times Z_{iq})$,

where: $D_{Li}$ is a lithium ion diffusion coefficient; S is the area of the small circular sheet in the button battery prepared above; and $Z_{iq}$ is s specific capacity of a simple substance;

wherein $Z_{iq}$ can be measured by the following steps: subjecting to the button battery prepared above to constant-current charging at a current of 0.1 C at 25°C until a battery voltage is less than 0.05 V, and then standing for 120 min; and then subjecting the button battery prepared above to constant-current discharging at a current of 0.1 C until a battery voltage is more than 1.5 V, and measuring the specific capacity of the button battery at this point, which recorded as $Z_{iq}$.

2. Confirmation of an existence form of a first doping element

The existence form of the first doping element is confirmed by X-ray diffraction (XRD), where the silicon-oxygen composite material is tested by an X-ray powder diffractometer (XRD, an instrument model: Bruker D8 ADVANCE), a target material is Cu K $\alpha$; a voltage and a current are 40 KV and 40 mA, a scanning angle range is 5 ° to 80 °, a scanning step is 0.00836 °, and time per step is 0.3 s, and it is confirmed that the first doping element exists in a crystal form from the morphology of the diffraction peak in the obtained pattern.

3. Uniform doping of a first doping element

A conductive adhesive is attached to a sample table, powdery samples of silicon composite materials in respective examples and comparative examples are taken and spread on the conductive adhesive, non-adhered powder is blown away by an ear washing ball, gold is sprayed, and sectional cutting is performed on particles of the powdery samples by using argon gas plasma. EDS equipped with a PhilipsXL-30 field emission scanning electron microscope is used to obtain scanning electron micrographs of the powdery samples at an accelerating voltage of 10 kV and an emission current of 10 mA.

4. Grain size of a crystal formed by a first doping element

The XRD pattern of the silicon-oxygen composite material is measured according to a JIS/K0131-1996 test standard, and peak width at half height β and diffraction angle θ of a diffraction peak of a crystal plane of the first doping element (101) are taken from the XRD pattern of the silicon-oxygen composite material, and used for calculation in the Debye-Scherrer equation to obtain a grain size of a crystal. The Debye-Scherrer equation is as follows: $Dhkl = k\lambda/(\beta cos\theta)$, where Dhkl denotes a grain size of a crystal in nm; k denotes Scherrer constant, 0.89; λ denotes an incident X-ray wavelength, 0.15406 nm; β denotes a peak width at half height of a diffraction peak in rad; and θ denotes a diffraction angle in degrees.

5. A silicon grain size

The XRD pattern of the silicon-oxygen composite material may be measured according to a JIS/K0131-1996 test standard, and peak width at half height β and diffraction angle θ of a diffraction peak of a crystal plane of Si (111) are taken from the XRD pattern of the silicon-oxygen composite material, and used for calculation in the Debye-Scherrer equation to obtain a grain size of silicon grain. The Debye-Scherrer equation is as follows: Dhkl=kλ/(βcosθ), where Dhkl denotes a grain size of a silicon grain in nm, k denotes Scherrer constant, 0.89; λ denotes an incident X-ray wavelength, 0.15406 nm; β denotes a peak width at half height of a diffraction peak in rad; and θ denotes a diffraction angle in degrees.

6. Mass contents of a first doping element and a second doping element

measurement is performed referring to an EPA 6010D-2014 standard; and specifically, the measurement may be performed by using ICP-OES (Elemental Analysis-Inductively Coupled Plasma Optical Emission Spectroscopy), where a sample to be measured is first dissolved in a strong acid to form a liquid, the liquid is then introduced into an ICP light source by means of atomization, and the gaseous atoms to be measured are ionized and excited in a strong magnetic field and then returned from an excited state to a ground state, and energy is released in the above process and recorded as different characteristic spectral lines to perform quantitative analysis of the first doping element and second doping element.

7. Testing for battery cycle performance at 25°C

The secondary batteries prepared in Examples and Comparative examples were subjected to the following one charge-discharge cycle: the batteries are charged with a constant current at a rate of 0.5 C to a charge cut-off voltage 4.25 V, then are charged at a constant voltage till the current is ≤ 0.05 C, are left to stand for 5 min, then are discharged at a constant current at a rate of 0.33 C to a discharge cut-off voltage V2, and are left to stand for 5 min. According to this method, the battery is subjected to a cyclic charge-discharge test until the battery capacity is attenuated to 80%. At this point, the number of cycles is the cycle life of the battery at 25°C.

8. Battery energy density

At 25°C, the secondary batteries prepared in respective Examples and Comparative Examples are left to stand for 2 h, charged at 0.1 C to a charge cut-off voltage, and then continually changed with a constant voltage at the charge cut-off voltage until a current is 0.05 C to stop the charging (where C represents a rated capacity of a battery cell). The secondary battery is left to stand at 25°C for 1 h. The secondary battery is discharged at 0.1 C to a discharge cut-off voltage, and total discharge capacity C0 and total discharge energy E0 discharged from the secondary battery are recorded.
Mass measurement of a secondary battery: a secondary battery is placed on an electronic scales until a mass reading is stable, and mass value M0 of the secondary battery is read.
A mass energy density of a secondary battery is E0/M0.

9. Discharge time of a battery at 40% SOC

The secondary batteries prepared in Examples and Comparative examples are subjected to the following process to record discharge time: discharging with a constant current at 0.33 C to 2.8 V, and standing for 30 min; charging with a constant current at 0.33 C to 4.25 V and then with a constant voltage at 0.05 C until a stable voltage, and standing for 30 min; discharging with a constant current at 0.33 C to 4.25 V and then with a constant voltage at 0.05 C until a stable voltage, and standing for 30 min; discharging with a constant current at 0.33 C to 0.4C0Ah (40%) SOC, and standing for 60 min; and discharging with a constant current at 4.5C to 2.8 V.

10. Discharge capacity retention rate of a battery at a low temperature

At -20°C, the secondary batteries prepared in the above Examples and Comparative examples are subjected to one charge-discharge cycle: charging with a constant current at 0.33 C to a voltage of 4.25 V, then charging with a constant voltage of 4.25 V to a current ≤ 0.05 C, and then discharging with a constant current at 0.33 C to a voltage of 2.5 V; and discharge capacity C1 for an initial cycle is recorded. The charge and discharge cycles are repeated in this manner, and discharge capacity C2 after 500 cycles is recorded.
The capacity retention ratio after 500 cycles is C2/C1×100%.

III. Analysis of test results of Examples and Comparative examples

The silicon-oxygen composite materials, negative electrode tabs, and batteries in Examples and Comparative examples are each prepared according to the above methods, parameters are measured, and results are shown in tables 1, 2, and 3 below.

Table 1

| No. | Preparation Process | | | | | | |
|---|---|---|---|---|---|---|---|
| | Raw Material and Amount of First Doping Element | Raw Material and Amount of Second Doping Element | Temperature for First Vapor Deposition (°C) | Time for First Vapor Deposition (h) | Temperature for Second Vapor Deposition (°C) | Time for Second Vapor Deposition (h) | Treatment Temperature for Carbon Coating (°C) |
| Example 1 | 30 g of tin metal | / | 1200 | 6.6 | 830 | 6.2 | 680 |
| Example 2 | 30 g of germanium metal | / | 1160 | 6.7 | 828 | 6.4 | 680 |
| Example 3 | 30 g of antimony metal | / | 1170 | 6.5 | 827 | 6.9 | 680 |
| Example 4 | 30 g of bismuth metal | / | 1180 | 6.4 | 826 | 6.8 | 680 |
| Example 5 | 15 g of tin metal + 15g of germanium metal | / | 1190 | 6.8 | 825 | 6.7 | 680 |
| Example 6 | 30 g of tin metal | / | 1150 | 6.9 | 820 | 6.6 | 650 |
| Example 7 | 30 g of tin metal | / | 1230 | 7.2 | 835 | 6.9 | 700 |
| Example 8 | 30 g of tin metal | / | 1180 | 7.1 | 826 | 7.9 | 660 |
| Example 9 | 30 g of tin metal | / | 1130 | 7 | 840 | 7.7 | 720 |
| Example 10 | 30 g of tin metal | / | 1025 | 7.8 | 820 | 7.8 | 610 |
| Example 11 | 30 g of tin metal | / | 1020 | 7.7 | 818 | 7.6 | 600 |
| Example 12 | 15 g of tin metal | / | 1170 | 7.8 | 820 | 7.5 | 700 |
| Example 13 | 45 g of tin metal | / | 1170 | 7.6 | 820 | 7.4 | 700 |
| Example 14 | 150 g of tin metal | / | 1170 | 7.2 | 802 | 7.1 | 700 |
| Example 15 | 7.5 g of tin metal | / | 1170 | 7.5 | 820 | 7.3 | 700 |
| Example 16 | 180 g of tin metal | / | 1170 | 7.4 | 820 | 7.2 | 700 |
| Example 17 | 30 g of tin metal | 30 g of elemental boron | 1175 | 7.6 | 850 | 6.9 | 700 |
| Example 18 | 30 g of tin metal | 30 g of lithium metal | 1175 | 7.5 | 855 | 7 | 700 |

(continued)

| No. | Preparation Process | | | | | | |
|---|---|---|---|---|---|---|---|
| | Raw Material and Amount of First Doping Element | Raw Material and Amount of Second Doping Element | Temperature for First Vapor Deposition (°C) | Time for First Vapor Deposition (h) | Temperature for Second Vapor Deposition (°C) | Time for Second Vapor Deposition (h) | Treatment Temperature for Carbon Coating (°C) |
| Comparative example 1 | / | / | 1170 | 7.3 | / | / | 680 |
| Comparative example 2 | 30 g of elemental boron | / | 1170 | 7.6 | 800 | 7.4 | 680 |
| Comparative example 3 | 30 g of tin metal | / | 1180 | 7.5 | 800 | 7.5 | 800 |

Table 2

| No. | Silicon-oxygen Composite Material | | | | | | | | | | 电池性能 | |
|---|---|---|---|---|---|---|---|---|---|---|---|---|
| | First Doping Element | Grain Size Y (nm) | Silicon Grain Size X (nm) | Y/2X | 5Xsin2θ -Y | Mass Fraction of First Doping Element | Second Dopant Element Type | Mass Fraction of Second Doping Element | Peak Width at Half Height of XRD Diffraction Peak of Crystal | Intensity of XRD Diffraction Peak of Crystal | Cycle Performance | Discharge Time at 40% SOC (S) |
| Example 1 | Sn | 7 | 5.0 | 0.70 | 6.50 | 2% | / | / | 5.0 | 720 | 1408 | 150 |
| Example 2 | Ge | 7 | 5.0 | 0.70 | 6.50 | 2% | / | / | 5.0 | 730 | 1282 | 145 |
| Example 3 | Sb | 7 | 5.0 | 0.70 | 7.25 | 2% | / | / | 5.0 | 740 | 1305 | 140 |
| Example 4 | Bi | 7 | 5.0 | 0.70 | 8.50 | 2% | / | / | 5.0 | 725 | 1355 | 138 |
| Example 5 | Sn-Ge | 7 | 5.0 | 0.70 | 6.43 | 1%-1% | / | / | 5.0 | 730 | 1605 | 155 |
| Example 6 | Sn | 5 | 3.0 | 0.83 | 2.95 | 2% | / | / | 5.0 | 660 | 1452 | 139 |
| Example 7 | Sn | 9 | 6.0 | 0.75 | 6.90 | 2% | / | / | 6.0 | 740 | 1303 | 135 |
| Example 8 | Sn | 7 | 4.0 | 0.88 | 3.80 | 2% | / | / | 5.5 | 700 | 1381 | 151 |
| Example 9 | Sn | 7 | 7.0 | 0.50 | 11.90 | 2% | / | / | 5.6 | 720 | 1242 | 149 |
| Example 10 | Sn | 7 | 1.5 | 2.33 | -2.95 | 2% | / | / | 5.5 | 690 | 1363 | 153 |
| Example 11 | Sn | 7 | 1.0 | 3.50 | -4.30 | 2% | / | / | 5.5 | 680 | 1322 | 154 |
| Example 12 | Sn | 7 | 5.0 | 0.70 | 6.50 | 1% | / | / | 4.0 | 710 | 1371 | 143 |
| Example 13 | Sn | 7 | 5.0 | 0.70 | 6.50 | 3% | / | / | 5.0 | 720 | 1392 | 148 |
| Example 14 | Sn | 7 | 5.0 | 0.70 | 6.50 | 10% | / | / | 5.0 | 1400 | 1082 | 152 |
| Example 15 | Sn | 7 | 5.0 | 0.70 | 6.50 | 0.5% | / | / | 3.0 | 700 | 1281 | 132 |
| Example 16 | Sn | 7 | 5.0 | 0.70 | 6.50 | 12% | / | / | 7.0 | 1200 | 1251 | 122 |
| Comparative example 1 | / | / | 5.0 | / | / | / | / | / | / | – | 803 | 62 |
| Comparative example 1 | B | 9 | 5.0 | 0.90 | 1.95 | 2% | / | / | 5.0 | 730 | 780 | 53 |
| Comparative example 1 | Sn | 12 | 7.0 | 0.86 | 6.90 | 2% | / | / | 6.0 | 740 | 950 | 108 |

Table 3

| No. | Silicon-oxygen Composite Material | | | Battery Performance | | |
| --- | --- | --- | --- | --- | --- | --- |
| | First Doping Element | Second Doping Element | Mass Fraction of Second Doping Element | Cycle Performance | Discharge Time at 40% SOC (S) | Discharge Capacity Retention Rate at Low Temperature |
| Example 1 | Sn | / | / | 1408 | 150 | 80.2% |
| Example 17 | Sn | B | 2% | 1305 | 144 | 87.6% |

Table 4

| No. | Silicon-oxygen Composite Material | | | Battery Performance | | |
| --- | --- | --- | --- | --- | --- | --- |
| | First Doping Element | Second Doping Element | Mass Fraction of Second Doping Element | Cycle Performance | Discharge Time at 40% SOC (S) | Energy Density (Wh/Kg) |
| Example 1 | Sn | / | / | 1408 | 150 | 412 |
| Example 18 | Sn | Li | 2% | 1382 | 147 | 421 |

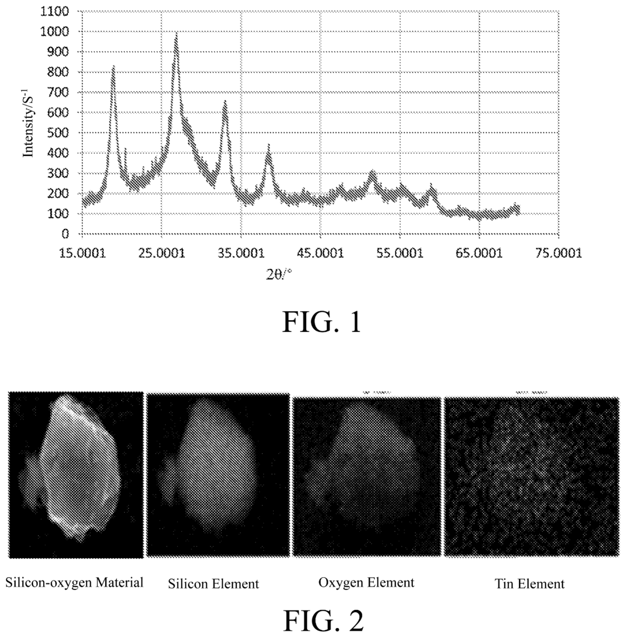

FIG. 1 is an XRD pattern of the silicon composite material of Example 1, and it can be seen from the XRD pattern of FIG. 1 that a peak appears at a position where $2\theta$ is 33°, indicating that tin in Example 1 exists in a crystal form in the silicon-oxygen material matrix.

FIG. 2 is a scanning electron microscope image of the silicon-oxygen composite material, and it can be seen from the figure that the first doping element tin is uniformly distributed in the silicon-oxygen material matrix.

The silicon-oxygen composite materials in Examples 1-18 comprise the silicon-oxygen material matrix and the first doping element, at least one of Sn, Ge, Sb, and Bi, distributed in the silicon-oxygen material matrix, wherein lithium ion diffusion coefficients of simple substances of Sn, Ge, Sb, and Bi at 25°C are larger than the lithium ion diffusion coefficient of elemental silicon at 25°C, at least a part of Sn, Ge, Sb, or Bi exists in a crystal form in the silicon-oxygen material matrix, and the first doping element has a grain size $\leq$ 9 nm.

It can be seen from the comparison of Examples 1-18 with Comparative example 1 that the silicon-oxygen composite material comprising the first doping element, Sn, Ge, Sb or Bi, can enable prolonged discharge time, improved rate performance, improved cycle performance, and a prolonged cycle life of a battery.

It can be seen from the comparison of Examples 1-18 with Comparative example 2 that the lithium ion diffusion coefficient of the simple substance of the first doping element in the silicon-oxygen composite material that is larger than that of a simple substance of a silicon element can enable prolonged discharge time, improved rate performance, improved cycle performance, and a prolonged cycle life of a battery.

It can be seen from the comparison of Examples 1-16 with Comparative example 1 that the grain size of the crystal formed by the first doping element in the silicon-oxygen composite material being $\leq$ 9 nm can enable prolonged discharge time, improved rate performance, improved cycle performance, and a prolonged cycle life of a battery.

It can be seen from the comparison of Examples 1 and 6 with Example 7 that the grain size of the crystal formed by the first doping element being $\leq$ 7 nm can enable further prolonged discharge time, further improved rate performance and cycle performance, and a prolonged cycle life of a battery.

It can be seen from Examples 1-16 that the grain size Y nm of the crystal in the silicon-oxygen composite material and the grain size X nm of the silicon grain satisfying at least one of: $0.35 \leq Y/2X \leq 4$ or $-5 \leq 5X\sin2\theta-Y \leq 15$, where $2\theta$ is the XRD diffraction angle of the crystal formed by the doping element, enables a battery having excellent cycle performance and rate performance, and a prolonged cycle life.

It can be seen from the comparison of Examples 1-4, 6-8, and 10-11 with Example 9 that the grain size of the crystal in the silicon-oxygen composite material and the grain size X nm of the silicon grain satisfying the following relational expression $0.7 \leq Y/2X \leq 4$ can further increase cycle performance of a battery.

It can be seen from comparison of Examples 1-4, 6-8, and 10-11 with Example 9 that the grain size of the crystal in the silicon-oxygen composite material and the grain size X nm of the silicon grain satisfying the following relational expression $-5 \leq 5X\sin2\theta-Y \leq 10$, where $2\theta$ is the XRD diffraction angle of the tin crystal can further increase cycle performance of a battery.

It can be seen from Examples 1-16 that the XRD diffraction pattern of the silicon-oxygen composite material includes the diffraction peak of the crystal of the first doping element having a peak width at half height of 3 ° - 7 °, and an intensity of 600 $S^{-1}$-1200 $S^{-1}$ enables a battery having excellent cycle performance and rate performance, and a prolonged cycle life.

It can be seen from Examples 1-16 that the mass fraction of the first doping element that is less than or equal to 12% based on the total mass of the silicon-oxygen composite material enable a battery having excellent cycle performance and rate performance, and a prolonged cycle life. It can be seen from the comparison of Examples 1 and 12-14 with Examples 15-16 that the mass fraction of the first doping element that is 1% - 10% based on the total mass of the silicon-oxygen composite material can further enable prolonged discharge time, and improved rate performance of a battery.

The silicon-oxygen composite materials of Examples 17 and 18 further include a second doping element of B or Li, and it can be seen from the comparison of Example 17 with Example 1 that doping with a second element B can increase a discharge capacity retention rate of a battery at a low temperature and improve use performance of a battery at a low temperature. It can be seen from the comparison of Example 18 with Example 1 that doping with a second element Li can increase an energy density of a battery, satisfying needs for a new battery.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

**Claims**

1. A silicon-oxygen composite material comprising a silicon-oxygen material matrix and a first doping element distributed in the silicon-oxygen material matrix, at least a part of the first doping element existing in a crystal form in the silicon-oxygen material matrix, and the first doping element has a grain size ≤ 9 nm, wherein the first doping element satisfies: a lithium ion diffusion coefficient of a simple substance of the first doping element at 25°C is larger than that of elemental silicon at 25°C.

2. The silicon-oxygen composite material according to claim 1, wherein

   the lithium ion diffusion coefficient of the simple substance of the first doping element at 25°C is greater than $10^{-14}cm^2/S$, optionally greater than $10^{-14}cm^2/S$ and smaller than $10^{-13}cm^2/S$; and/or,
   the lithium ion diffusion coefficient of the elemental silicon at 25°C is less than $10^{-14}cm^2/S$, optionally greater than $10^{-15}cm^2/S$ and less than $^{-14}cm^2/S$.

3. The silicon-oxygen composite material according to claim 1 or 2, wherein the first doping element comprises at least one of Sn, Ge, Sb, Bi, and Sr.

4. The silicon-oxygen composite material according to any one of claims 1 to 3, wherein the grain size of the first doping element is ≤ 7 nm.

5. The silicon-oxygen composite material according to any one of claims 1 to 4, wherein an XRD diffraction pattern of the silicon-oxygen composite material further includes a diffraction peak of a silicon grain, and at least one of the following relational expressions (1) - (2) exists in the silicon-oxygen composite material:

   (1) 0.35 ≤ Y/2X ≤ 4, optionally 0.7 ≤ Y/2X ≤ 4; and
   (2) -5 ≤ 5Xsin2 θ - Y ≤ 15, optionally -5 ≤ 5Xsin2 θ - Y ≤ 10;

   wherein Y is the grain size of the first doping element, X is a grain size of the silicon grain, both X and Y being in nm, and 2θ is an XRD diffraction angle of the crystal.

6. The silicon-oxygen composite material according to any one of claims 1 to 5, wherein the XRD diffraction pattern of the silicon-oxygen composite material comprises a diffraction peak of the crystal of the first doping element having a peak width at half height of 3 ° - 7°, and/or an intensity of 600 $S^{-1}$-1200 $S^{-1}$.

7. The silicon-oxygen composite material according to any one of claims 1 to 6, wherein a mass fraction of the first doping element is less than or equal to 12%, optionally 1% - 10%, based on the total mass of the silicon-oxygen composite material.

8. The silicon-oxygen composite material according to any one of claims 1 to 7, wherein the silicon-oxygen composite material further comprises a second doping element comprising at least one of a non-metallic element, an alkali metal element, and an alkaline earth metal element;

   optionally, the non-metallic element comprises at least one of B, N, F, Cl, and S;
   optionally, the alkali metal element comprises at least one of Li, Na, and K; and
   optionally, the alkaline earth metal element comprises at least one of Mg, Ca, Be, and Sr.

9. The silicon-oxygen composite material according to claim 8, wherein a mass fraction of the second doping element is less than or equal to 7%, optionally 1% - 5%, based on the total mass of the silicon-oxygen composite material.

10. The silicon-oxygen composite material according to any one of 1 to 9, wherein the silicon-oxygen composite material further comprises a carbon layer at least partially covering a surface of the silicon-oxygen material matrix; and optionally, the carbon layer has a thickness of 1-4 nm.

11. The silicon-oxygen composite material according to any one of claims 1 to 10, wherein the silicon-oxygen composite material has a volume distribution particle diameter Dv50 of 3 $\mu$m - 8 $\mu$m, optionally 4 $\mu$m - 6 $\mu$m.

12. A preparation method for a silicon-oxygen composite material, comprising:

    performing first vapor deposition on a first vapor comprising elemental silicon and silicon dioxide to obtain a silicon-oxygen material matrix;
    performing second vapor deposition on a second vapor comprising a first doping element and the silicon-oxygen material matrix to obtain the silicon-oxygen composite material, at least a part of the first doping element existing in a crystal form in the silicon-oxygen material matrix and the first doping element crystal having a grain size $\leq 9$ nm, wherein the first doping element satisfies: a lithium ion diffusion coefficient of a single element of the first doping element at 25°C is larger than that of elemental silicon at 25°C.

13. The preparation method according to claim 12, wherein a temperature for the first vapor deposition is 1000°C - 1300°C, optionally 1100°C - 1250°C, and/or time for the first vapor deposition is 6 h - 12 h, optionally 8 h - 10 h.

14. The preparation method according to claim 12 or 13, wherein a temperature for the second vapor deposition is 800°C - 900°C, optionally 820°C - 880°C, and/or time for the second vapor deposition is 4 h - 10 h, optionally 6 h - 8 h.

15. The preparation method according to any one of claims 12 to 14, wherein the preparation method further comprises:

    performing second vapor deposition on a second vapor comprising the first doping element and the second doping element and the silicon-oxygen material matrix to obtain the silicon-oxygen composite material, wherein the second doping element includes at least one of a non-metal element, an alkali metal element, and an alkaline earth metal element;
    optionally, the non-metallic element comprises at least one of B, N, F, Cl, and S;
    optionally, the alkali metal element comprises at least one of Li, Na, and K; and
    optionally, the alkaline earth metal element comprises at least one of Mg, Ca, Be, and Sr.

16. The preparation method according to any one of claims 12 to 15, wherein the preparation method further comprises performing a carbon coating treatment on a surface of the silicon-oxygen composite material;

    optionally, a temperature for the carbon coating treatment is 500°C - 750°C, optionally 660°C - 720°C; and
    optionally, time for the carbon coating treatment is 2 h - 10 h, optionally 6 h - 8 h.

17. A secondary battery comprising a negative electrode tab, wherein the negative electrode tab comprises a negative electrode active material comprising the silicon-oxygen composite material according to any one of claims 1 to 11 or the silicon-oxygen composite material prepared by the preparation method according to any one of claims 12 to 16.

18. An electric device comprising the secondary battery according to claim 17.

FIG. 1

Silicon-oxygen Material    Silicon Element     Oxygen Element     Tin Element

FIG. 2

EP 4 651 235 A1

5

FIG. 3

5

53

52
52
51

FIG. 4

28

FIG. 5

FIG. 6

FIG. 7

FIG. 8

## INTERNATIONAL SEARCH REPORT

| International application No. |
|---|
| **PCT/CN2023/091786** |

**A. CLASSIFICATION OF SUBJECT MATTER**

H01M4/48(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 硅, 二氧化硅, 掺杂, 锡, 锗, 锑, 铋, 锶, 晶体, silicon, Si, silicon dioxide, SiO2, dope, tin, Sn, germanium, Ge, antimony, Sb, bismuth, Bi, strontium, Sr, crystal

**C. DOCUMENTS CONSIDERED TO BE RELEVANT**

| Category* | Citation of document, with indication, where appropriate, of the relevant passages | Relevant to claim No. |
|---|---|---|
| X | CN 113506861 A (BEIJING IAMETAL NEW ENERGY CO., LTD. et al.) 15 October 2021 (2021-10-15) description, paragraphs 10-115, and figures 1-8 | 1-18 |
| X | WO 2019031516 A1 (MURATA MANUFACTURING CO., LTD.) 14 February 2019 (2019-02-14) description, paragraphs 14-51, 69-75, and 113-180, and figures 1-19 | 1-18 |
| A | CN 114883546 A (JIANGSU ZENERGY BATTERY TECHNOLOGIES CO., LTD.) 09 August 2022 (2022-08-09) entire document | 1-18 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 January 2024** | **24 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/091786**

| Patent document cited in search report | | | Publication date (day/month/year) | Patent family member(s) | | | Publication date (day/month/year) |
|---|---|---|---|---|---|---|---|
| CN | 113506861 | A | 15 October 2021 | CN | 113506861 | B | 17 May 2022 |
| WO | 2019031516 | A1 | 14 February 2019 | JPWO | 2019031516 | A1 | 16 April 2020 |
| | | | | JP | 6988896 | B2 | 05 January 2022 |
| CN | 114883546 | A | 09 August 2022 | None | | | |

Form PCT/ISA/210 (patent family annex) (July 2022)